# EUROPEAN PATENT SPECIFICATION

(11) **EP 0 633 492 B1**
(45) Date of publication and mention of the grant of the patent: **28.03.2001**
(21) Application number: 94110480.4
(22) Date of filing: 06.07.1994
(51) Int. Cl.: G03B 27/62

(54) **Photographic printer with negative mask**
Fotografisches Kopiergerät mit einer Negativmaske
Tireuse photographique avec une porte-négatif

(30) Priority: 06.07.1993 JP 16695893
(43) Date of publication of application: 11.01.1995
(73) Proprietor: FUJI PHOTO FILM CO., LTD., Kanagawa-ken (JP)
(72) Inventor: Shioya, Seiji, c/o Fuji Photo Film Co., Ltd., Minato-ku, Tokyo (JP)
(74) Representative: Grünecker, Kinkeldey, Stockmair & Schwanhäusser Anwaltssozietät

(56) References cited:
- DE-A- 3 713 770
- DE-B- 1 275 353
- US-A- 2 256 396
- US-A- 3 658 223
- US-A- 4 353 645
- US-A- 4 931 829
- US-A- 4 933 716
- PATENT ABSTRACTS OF JAPAN, vol. 16, no. 147 (P-1336) , 13. April 1992 & JP 4 003045 A

## Description

### BACKGROUND OF THE INVENTION

### Field of the Invention:

The present invention relates to a negative mask for a photographic printer, which is used when images on a negative film are printed/exposed onto a photosensitive material and which is applied even to, for example, a printer-processor which is a combination of a photographic printer and a processor.

In particular, the present invention relates to a photographic printer in accordance with the preamble of claim 1.

### DESCRIPTION OF THE RELATED ART:

A photographic printer of the aforementioned type is disclosed in JP-4-003045A.

A printer-processor is a so-called "mini-laboratory" and is used in a developing, printing and enlargement (DPE) shop or the like. In the printer-processor, a printer unit, which prints/exposes images recorded on a negative film onto photographic paper, and a processor unit, which effects development processing of the printed and exposed photographic paper, are combined into a single unit. By simply setting an elongated photographic paper at the printer-processor, the photographic paper can be automatically conveyed to the printer unit and the processor unit and processed thereat.

Namely, in the printer unit of the printer-processor, the images recorded on the negative film are enlarged to selected predetermined sizes and are printed on photographic paper. The photographic paper on which the images of the negative film have been printed is continuously conveyed to the processor unit where the negative film is subjected to developing processing so that the images are finished as photographic prints.

When such a negative film is processed, in addition to normal size image frames (hereinafter called "full size image frames"), panorama-size image frames, which have been used in recent years, exist on the negative film. A panorama-size image frame is a rectangular image surface which is narrower than a full-size image frame.

However, the conventional printer-processor has not been able to judge, on at least a negative mask for a panorama size, whether the size of the image frame is full size or panorama size. Therefore, first, an operator counts, from the leading image frame of the negative film, the image frames to determine the number of the image frame at which there is a panorama size image, and then the negative film is loaded into the printer-processor. The panorama-size image frame is first skipped over and only the full-size image frames are printed and subjected to exposure. Thereafter, the negative mask for full size is replaced with the negative mask for panorama size, which has a window smaller (narrower) than that of the former negative mask. Finally, only the panorama-size image frame is printed and subjected to exposure.

Because the negative mask having the window smaller than that of the negative mask for full size is used when printing and exposing the panorama-size image frame, it is difficult to visually distinguish between full size and panorama size. Thus, a drawback arises in that since processes, such as a process for confirming the position of the panorama-size image frame in advance, are required, the workability is reduced. Further, if there is an error in confirming the position of the panorama-size image frame, a full-size image frame is printed and subjected to exposure as a panorama-size image frame and the photographic paper is rendered useless.

### SUMMARY OF THE INVENTION

With the foregoing in view, it is an object of the present invention to provide a photographic printer having a negative mask, which permits visual discernment between full size and panorama size, improves workability, and prevents photographic paper from being wasted.

The above object is solved by a photographic printer in accordance with claim 1.

According to the present invention, there is provided a photographic printer having a negative mask which includes a set of mask members used for covering a negative film, each having a window through which printing light passes and which is defined in a portion corresponding to each of image frames on the negative film, and cut-away portions each of which is defined in at least one side of the window so as to enlarge the window and through which portions of the negative film, which extend out from each image frame, can be visually observed.

Such a negative mask can bring about the following advantageous effects.

The window, through which the printing light passes, is defined in the portion of each mask member, which corresponds to each image frame on the negative film. When an operator visually observes the negative film through the cut-away portions each formed in at least one side of the window so as to enlarge the window, the type of image frame can be decided. That is, if the operator cannot visually observe the image frame within the cut-away portions through the cut-away portions, it can then be determined that such an image frame is the proper one. On the other hand, if one is able to visually observe the image frame within the cut-away portions, it can then be determined that the image frame is an improper one.

It is therefore possible to easily determine the type of image frame, improve workability and prevent the waste of photographic paper.

In a specific example of the present invention, preferably, the set of mask members comprises a pressing plate urged downward by springs and a mask disposed below the pressing plate with the negative film being securely interposed between the pressing plate and the mask. With such a negative mask for a photographic printer according to the present invention, the type of image frame can be easily determined and the negative film can be reliably fixed.

According to the present invention, the negative mask includes a set of mask members used for covering a negative film and each having a window through which printing light passes and which is defined in a portion corresponding to each of the image frames on the negative film, cut-away portions each of which is defined in at least one side of the window so as to enlarge the window and through which portions of the negative film, which extend out from each image frame, can be visually observed, and a light-shading member may be attached to one set of mask members, so as to cover the cut-away portions at positions whereby the printing light transmitted through the cut-away portions is blocked and which is formed in such a manner that the cut-away portions can be confirmed from a diagonal direction.

Such a negative mask can bring about the following advantageous effects.

The light-shading member is formed such that the cut-away portions can be confirmed from an oblique direction. Since, however, the light-shading member covers the cut-away portions, it blocks or shades the printing light, which has passed through the cut-away portions. Thus, the printing light no longer reaches to the photographic paper.

In a specific example of the present invention, preferably, the light-shading member has hoods diagonally bent upward so as to block the printing light transmitted through the cut-away portions and the hoods completely cover the cut-away portions. With such a negative mask according to the present invention, the printing light is blocked by the hoods and does not reach to the photographic paper. Besides, an operator can confirm the cut-away portions from a diagonal direction even if the hoods are provided.

According to the present invention, the negative mask may include a set of mask members used for covering a negative film with each having a rectangular-shaped window through which printing light passes and which is defined in a portion corresponding to each of the image frames on the negative film, cut-away portions each of which is provided at a position near an end of at least one side of the rectangular-shaped window so as to enlarge the window and through which portions of the negative film, which extend out from each image frame, can be visually observed, and a light-shading member which is attached to one set of the mask members, which is provided so as to cover the cut-away portions at positions where the printing light transmitted through the cut-away portions is blocked and which is formed in such a manner that the cut-away portions are confirmable from a diagonal direction.

Such a negative mask can bring about the following advantageous effects.

Each mask member has a rectangular-shaped window and each of the cut-away portions is provided at the position (between the center of at least one side of the rectangular-shaped window and the end thereof) near the end of at least one side of the rectangular-shaped window. Thus, an exposure portion for positioning the negative film, which is disposed in the center of a normal image frame or at an end thereof to position the negative film, is not included within the cut-away portions, so that the type of image frame can be more reliably decided.

In a specific example of the present invention, the mask member preferably has a rectangular-shaped window formed so as to correspond to a rectangular-shaped image frame which is narrower than an image frame of a normal size. Even in the case of a rectangular-shaped image frame of a panorama size, which is narrower than the image frame of the normal size, the type of image frame can be easily ascertained by virtue of such a negative mask according to the present invention.

The above and other objects, features and advantages of the present invention will become apparent from the following description taken in conjunction with the accompanying drawings in which preferred embodiments of the present invention are shown by way of illustrative example.

### BRIEF DESCRIPTION OF THE DRAWINGS

FIG. 1 is a view schematically illustrating the structure of a printer-processor to which a first embodiment of the present invention is applied;
FIG. 2 is a perspective view showing both a negative carrier to which the first embodiment of the present invention is applied and a negative mask;
FIG. 3 is a perspective view of a negative mask according to the first embodiment of the present invention;
FIG. 4 is a plan view illustrating the negative mask shown in FIG. 3;
FIG. 5 is a cross-sectional view taken along line 5 - 5 of FIG. 4;
FIG. 6 is a sectional side view showing the negative mask shown in FIG. 3;
FIGS. 7A through 7C are respectively plan views for describing the shape of a window portion of the negative mask shown in FIG. 3, wherein FIG. 7A is a plan view of a pressing plate, FIG. 7B is a plan view showing a state in which the pressing plate is superposed on the negative mask, and FIG. 7C is a plan view illustrating a state in which a pressing plate, to which a light-shading member is attached, is superposed on the negative mask;
FIG. 8 is a plan view showing image frames of images recorded on a negative film;
FIG. 9 is a plan view illustrating image frames of images recorded on a photographic paper;
FIG. 10 is a side view showing a negative mask according to a second embodiment of the present invention;
FIGS. 11A through 11C illustrate a light-shading member used for the negative mask shown in FIG. 10, wherein FIG. 11A is a plan view, FIG. 11B is a front view, and FIG. 11C is a side view;
FIG. 12 is a cross-sectional view showing a negative mask according to a third embodiment of the present invention; and
FIG. 13 is a perspective view showing a pressing plate and a light-shading member of the negative mask shown in FIG. 12.

### DETAILED DESCRIPTION OF THE PREFERRED EMBODIMENTS

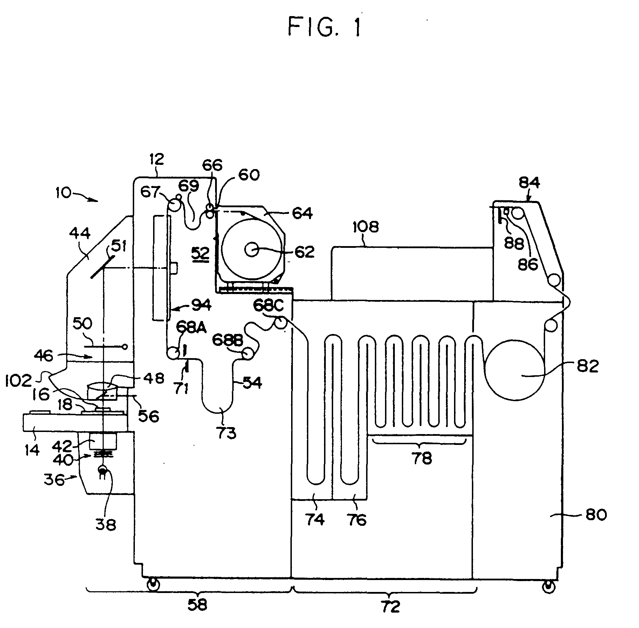

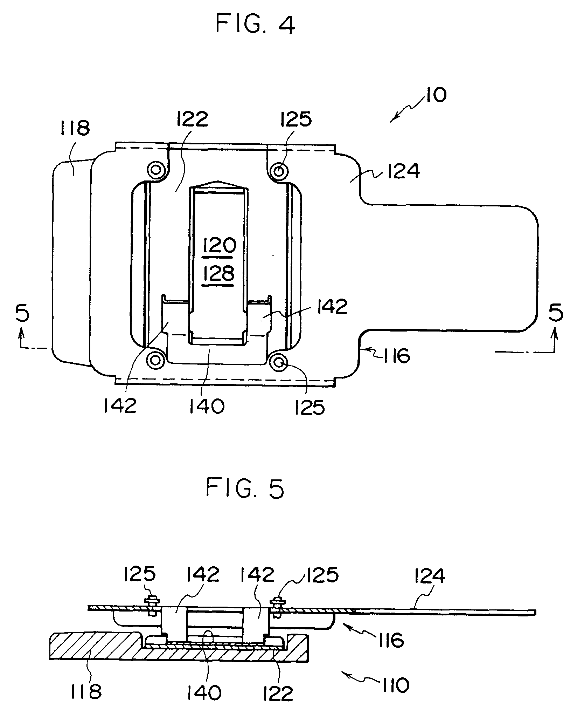

A negative mask suitable for use in a photographic printer, according to a first embodiment of the present invention will hereinafter be described with reference to FIGS. 1 through 9 in which, by way of illustrative example, the negative mask is applied to a printer unit of a printer-processor.

FIG. 1 shows a printer-processor 10 to which the present embodiment is applied. First, the overall structure of the printer-processor 10 will be described.

As seen in FIG. 1, the printer-processor 10 has a casing 12 for covering an external portion thereof and a working table 14 which projects from the casing 12 toward the left. A negative carrier 18 on which a negative film 16 is conveyed and set at each image frame by an unillustrated conveying mechanism, is placed on an upper surface of the working table 14 via a swiveling mechanism (not shown). The swiveling mechanism enables the negative carrier 18 to turn together with the negative film 16 about a turning axis which extends in upper and downward directions as seen in FIG. 1. Further, a light source portion 36 is placed below the working table 14. The light source portion 36 is provided with a light source 38 disposed in the turning axis of the swiveling mechanism. Accordingly, the optical axis of the light corresponding to printing light emitted from the light source 38 is coaxial with the turning axis of the swiveling mechanism. The light reaches the negative film 16 set on the negative carrier 18 after passing through a filter unit 40 and a diffusion barrel 42. The filter unit 40 comprises three filters which are cyan (C), magenta (M) and yellow (M). Each filter is capable of entering into the optical axis of the light.

An optical system 46 is mounted to an arm 44 disposed above the working table 14. The optical system 46 is comprised of optical system components such as a lens 48, a shutter 50 and a reflecting mirror 51 and the like. The lens 48 and the shutter 50 are disposed in the optical axis of the light. The light, which has passed through the negative film 16, passes through the lens 48 and the shutter 50 as exposure light. The optical path of the light is deflected by the reflecting mirror 51 (i.e., the optical axis of the light is deflected by about 90 degrees). Thereafter, an image on the negative film 16 is formed on photographic paper 54 which is set in an exposure chamber 52.

Further, the optical system 46 has a density measuring unit 56 such as a CCD or the like, for measuring the density of the negative film 16. The density measuring unit 56 is electrically connected to an unillustrated controller, which sets an exposure correction value at the time of printing and exposure based on data measured by the density measuring unit 56 and data inputted via a keyboard operated by an operator.

That is, a printing and exposing unit (printer unit) 58, which enables printing processing, comprises the light source portion 36, the optical system 46 and the exposure chamber 52.

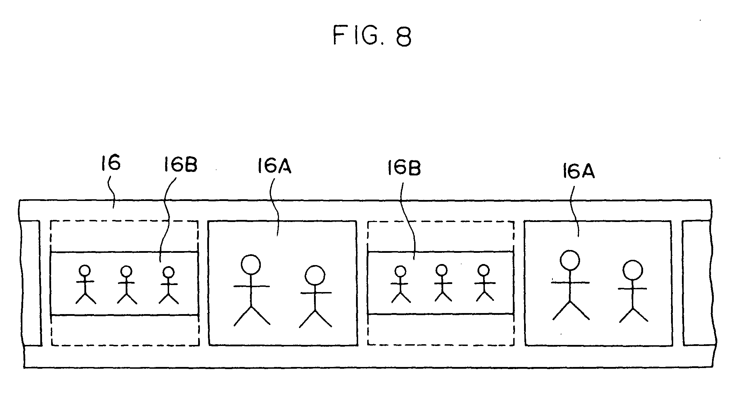

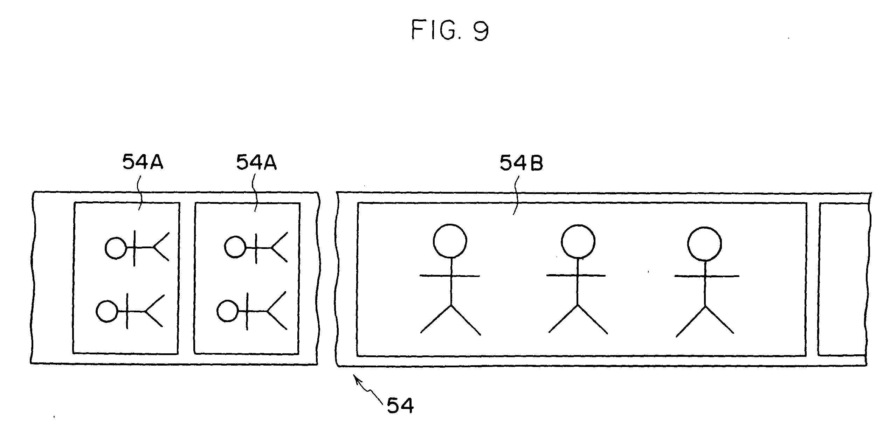

A magazine mounting portion 60 is disposed at the upper, right-hand corner of the exposure chamber 52. A paper magazine 64 which accommodates elongated photographic paper 54 wound onto a reel 62 in roll form is mounted to the magazine mounting portion 60. The width of the photographic paper 54 is equal to the lengthwise side of a full-sized photographic print 54A and the narrow side of a panorama-size photographic print 54B as shown in FIG. 9. Thus, when prints 54A and 54B with these sizes are printed onto the photographic paper 54 from the negative film 16 and compared with image frames 16A and 16B on the negative film 16 shown in FIG. 8, they are not only different in enlargement magnification but are disposed with a 90° angular difference.

On the other hand, a pair of conveying rollers 66 is disposed in the vicinity of the magazine mounting portion 60 which horizontally conveys photographic paper 54 nipped therebetween, to the exposure chamber 52. The photographic paper 54 is conveyed over a roller 67 in front of the arm 44 and turned 90 degrees so as to extend in a downward direction. Incidentally, the photographic paper 54 is guided such that it forms a U-shaped, first stock portion 69 between roller pairs 66 and 67.

An exposure stage 94 is provided on the downstream side of the photographic paper 54 as seen in the direction in which the photographic paper 54 is conveyed by the roller 67. The exposure stage 94 has a variable mask (not shown) connected to a controller so as to open and close the variable mask. Therefore, the dimensions of length and width, which indicate a mask range of the variable mask, are changed by the controller depending on print sizes such whether it is full size, panorama size or the like.

Rollers 68A, 68B and 68C are disposed below the exposure stage 94 of the exposure chamber 52. The photographic paper 54 onto which the image of the negative film 16 has been printed at the exposure stage 94, is turned at substantially about every 90 degrees and conveyed to a color development portion 74 of a processor unit 72 adjacent to the printing and exposing unit 58.

A cutter 71 for cutting the rear end of the photographic paper 54 which has already been subjected to a printing and exposing process, is provided on the downstream side of the roller 68A as seen in the direction in which the photographic paper 54 is fed by the roller 68A. Therefore, when the process is discontinued, the photographic paper 54 which remains in the exposure chamber 52 after being cut by the cutter 71, can be rewound into the paper magazine 64.

After being subjected to the printing/exposure process, the photographic paper 54 is guided such as to form a substantially U-shaped second stock portion 73 between rollers 68A and 68B. Thus, the photographic paper 54 stocked the second stock portion 73 in a substantially U-shape, offsets the difference between a time interval required for the printing and exposing unit 58 to apply the printing/exposure process to the photographic paper 54 and a time interval required for the processor unit 72 to apply development, bleaching/fixing and washing to the photographic paper 54.

In the color development unit 74, the photographic paper 54 is immersed into a developer so as to subject it to development. Thereafter, the developed photographic paper 54 is conveyed to a bleaching/fixing unit 76 provided adjacent to the color development unit 74. The bleaching/fixing unit 76 contains a bleaching and fixing liquid. The photographic paper 54 is immersed into the bleaching and fixing liquid so as to subject it to bleaching and fixing. The photographic paper 54, which has been subjected to the bleaching and fixing process, is conveyed to a washing unit 78 provided adjacent to the bleaching/fixing unit 76. The photographic paper 54 is immersed into the washing unit 78, which contains washing water so as to subject it to a washing process.

The photographic paper 54, which has been subjected to the washing process, is conveyed to a drying unit 80 provided adjacent to the washing unit 78. In the drying unit 80 the photographic paper 54 is wound around a drum 82 and subjected to hot air drying. The photographic paper 54, which has been subjected to the drying process, is then nipped between a pair of unillustrated rollers and discharged to a cutter unit 84 disposed on the downstream side of the drying unit 80.

The cutter unit 84 comprises a cut mark sensor 86 for detecting a cut mark applied to the photographic paper 54 and a cutter 88 for cutting the photographic paper 54. The cutter unit 84 cuts the photographic paper 54 at each image frame. The cut photographic papers 54 are discharged to a sorter 108 attached to the outside of the casing 12 so as to be sorted.

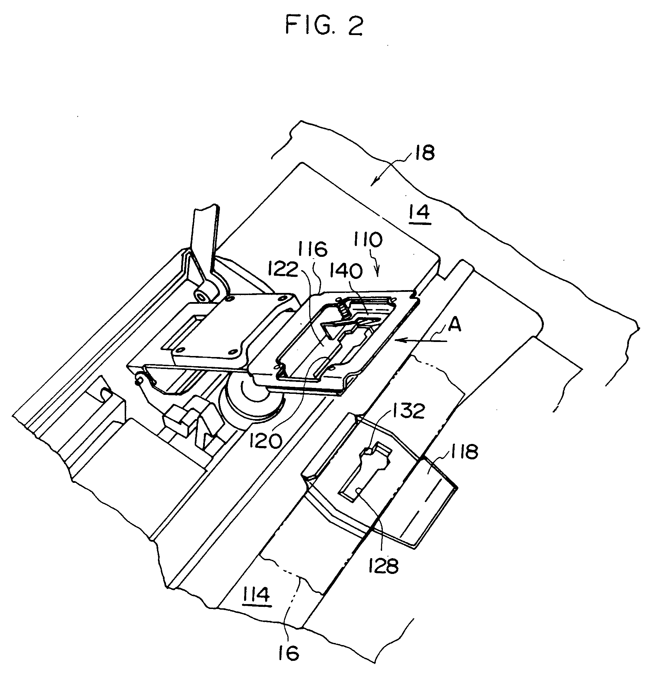

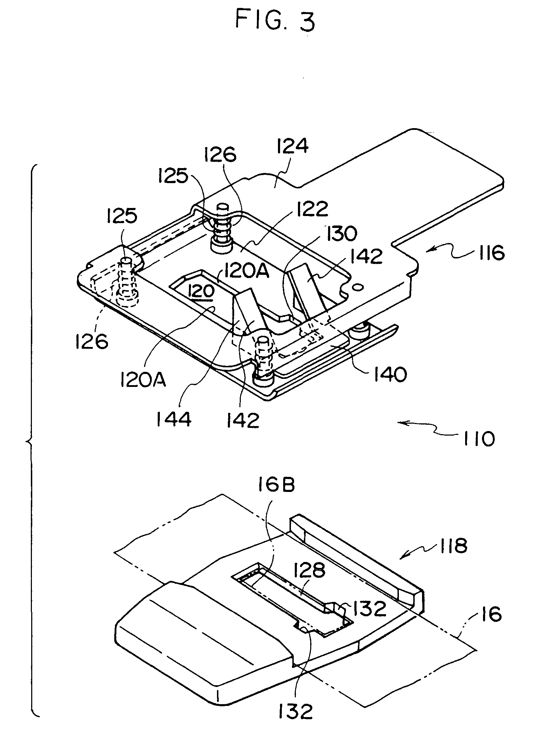

As shown in FIG. 2, a pressure-applying or squeezing-plate 116 attached along the direction indicated by arrow A and a mask 118 mounted on a portion 114 for passing the negative film 16 therethrough, are mounted to the negative carrier 18 which is disposed on the working table 14. A negative mask 110 is constructed by the squeezing-plate 116 and the mask 118. As shown in FIGS. 3 through 6, the squeezing-plate 116 has a pressing plate (also called an upper negative mask) 122 corresponding to a mask member having a window 120 defined therein, four pins 125 vertically planted in the pressing plate 122 and a main body 124 for urging the pressing plate 122 in a downward direction by the urging forces of coil springs 126 respectively wound around the pins 125.

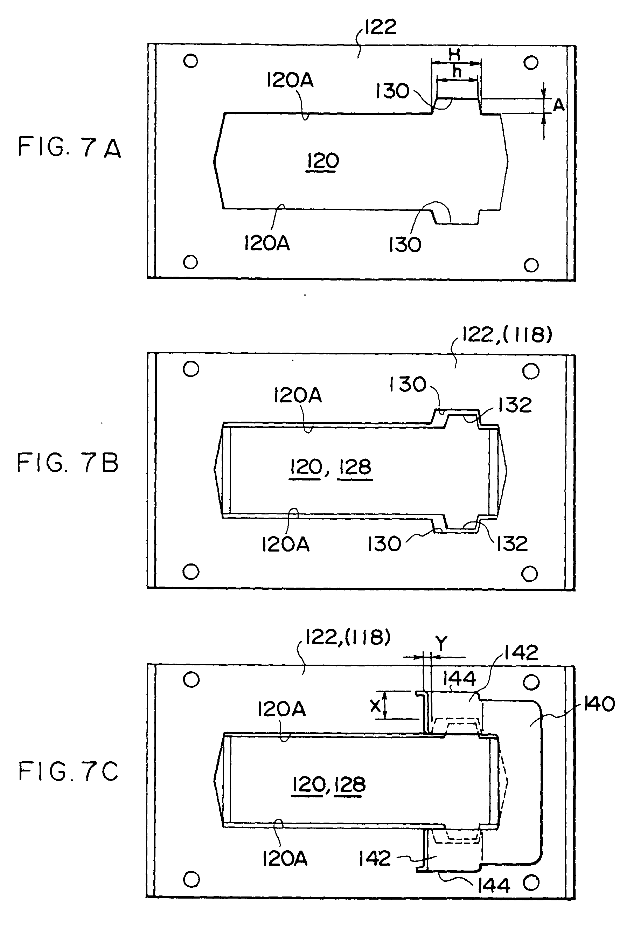

The window 120 is shaped in the form of a rectangle held in alignment with the panorama-size image frame 16B and has a pair of cut-away portions 130 respectively provided at positions near right ends of a pair of lengthwise sides 120A thereof as seen in FIG. 7 so as to enlarge the window 120. For example, looking at FIG. 7A, the amount of cut A of each cut-away portion 130 could be 3mm, the width H of the base of each cut-away portion 130 6mm and the width h of a leading end portion of each cut-away portion 130 5mm.

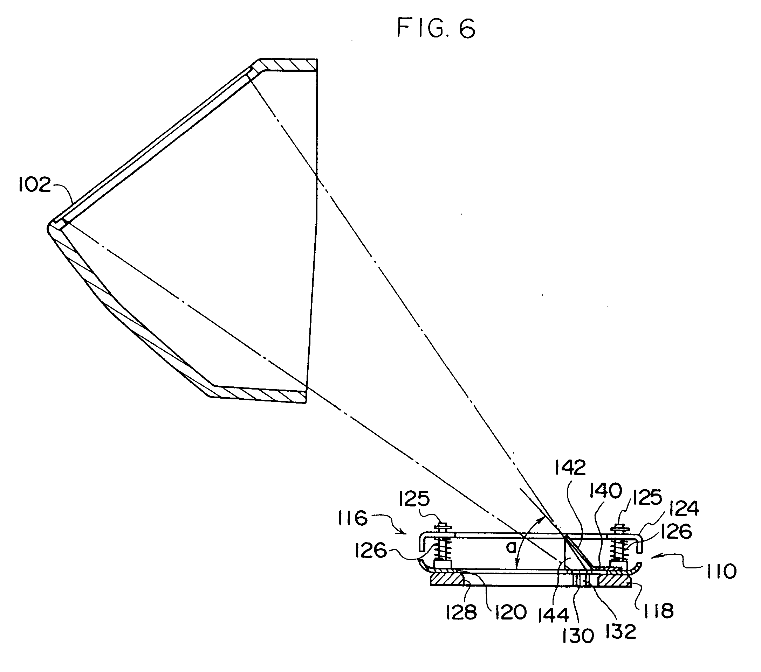

A U-shaped light-intransmissive or -shading member 140 in which a base end thereof is fixed to the pressing plate 122 by an adhesive or the like, is disposed on the pressing plate 122. A pair of hoods 142, which form leading end portions of the light-shading member 140, is obliquely bent (at an angle a of 53° shown in FIG. 6, for example) and raised on the side near the base end of the light-shading member 140. Further, the pair of hoods 142 extends from the base end of the light-shading member 140 so as to respectively cover the pair of cut-away portions 130. As shown in FIGS. 3 and 6, wall portions 144 which are bent in the shape of triangles form side portions of the pair of hoods 142, whereas the leading end portions of the pair of hoods 142 are in an open state.

In the present embodiment, a dimension X and a dimension Y (see FIG. 7) respectively indicate the amount of overlap of each pair of hoods 142 onto each of the cut-away portions 130. The dimension X is 1.5mm to 2mm while dimension Y is about 2.5mm. A light-shading effect can thus be reliably produced.

Further, the mask (also called an under negative mask) 118 corresponding to another mask member has a window 128 formed in alignment with the size of the image frame 16B on the negative film 16 so that the window 128 is slightly smaller than the window 120 of the pressing plate 122 (i.e., so that the window 128 is reduced by about 1mm, for example, in its transverse direction corresponding to an upper and downward direction as seen in FIG. 7B). The window 128 also has a pair of cut-away portions 132 formed so as to be opposed to the pair of cut-away portions 130 of the pressing plate 122.

Thus, if the pressing plate 122 is superimposed on the mask 118, the light emitted from the light source 38 passes through each of the windows 120 and 128. However, the light, which passes through the cut-away portions 130 and 132, is blocked by the pair of hoods 142 of the light-shading member 140 so that the light is prevented from being transmitted through the density measuring unit 56.

Further, since the leading end sides of the pair of hoods 142 are open, the operator can look through a confirmation window 102 shown in FIGS. 1 and 6, in the printer-processor 10 to confirm the type of image frame of the negative film 16. That is, when the operator attempts to confirm the type of image frame of the negative film 16, which is securely sandwiched between the squeezing-plate 116 and the mask 118 of the negative mask 110 by the urging forces of the coil springs 126, the operator can look through the confirmation window 102 to visually confirm the negative film 16 within the pair of cut-away portions 130 and 132 from an oblique direction.

Thus, the operator determines the kind of image frame to be a full-size image frame 16A if the images exist up to the negative film 16 within the cut-away portions 130 and 132. On the other hand, if they do not exist therein, the operator determines the image frame 16B to be panorama size. It is therefore possible to easily confirm whether the image frames on the negative film 16 held by the negative mask 110 are either a full-size image frame 16A or a panorama-size image frame 16B.

The operation of the present embodiment will now be described below.

A description will first be made of a processing sequence for printing a full-sized image frame and subjecting it to exposure, which is executed by the printer-processor 10.

Photographic paper 54 is conveyed to the exposure chamber 52 and positioned on the exposure stage 94. At the same time, an unillustrated full-size type negative mask is mounted to the negative carrier 18. When a printing/exposure process is started, the conveying mechanism for the negative carrier 18 is driven so as to position the negative film 16 and the light source 38 is turned on. Next, the kind of image frame is visually confirmed through the confirmation window 102. Thereafter, the density measuring unit 56 measures the LATD (large area transmittance density) of the image frame, which is used for the printing of the negative film 16. Further, an exposure correction value is set based on the measured LATD data and data manually inputted via a keyboard. The amount of exposure (exposure time) is calculated to determine the optimum exposure conditions. The respective filters of C, M and Y, which are disposed in the optical axis of the light, are moved in accordance with the exposure conditions.

Next, the shutter 50 is opened so that the light emitted from the light source 38 passes through the filter unit 40 and the negative film 16 so as to reach the exposure chamber 52. Thereafter, the printing of the images on the negative film 16 onto the photographic paper 54 positioned on the exposure stage 94 in the exposure chamber 52 is started. After a predetermined exposure time has elapsed, the shutter 50 is closed. Finally, a cut mark is applied to the photographic paper 54 which is then conveyed by one image frame.

Thus, the processing for printing/exposing one-frame images on the negative film 16 onto the photographic paper 54 is completed. By repeating such processing, the photographic paper 54, which has been subjected to the above processing, is successively conveyed to the processor unit 72.

The photographic paper 54, which has been subjected to the printing and exposing process and conveyed to the processor unit 72, is next fed to the color development unit 74, where it is immersed in developer so as to be subjected to development. The photographic paper 54, which has been subjected to development, is then conveyed to the bleaching/fixing unit 76 so as to be bleached and fixed. Thereafter, the photographic paper 54, which has been subjected to the bleaching/fixing, is conveyed to the washing unit 78 so as to be washed. Next, the photographic paper 54 is fed to the drying unit 80 so as to be dried. In this manner, full-size photographic prints 54A, as shown in FIG. 9, are formed on the photographic paper 54.

Cut marks on the dried photographic paper 54 are detected by a cutter unit 84. The photographic paper 54 is then cut according to each image and the cut photographic papers 54 are sorted by the sorter 108.

On the other hand, when a panorama-size image frame is printed and exposed, the negative carrier 18 is turned 90° by the swiveling mechanism and the full-size negative mask is replaced by the panorama-size negative mask 110 having small-size windows 120 and 128. Further, the lens 48 is changed or the enlarging magnification is adjusted by zooming. By performing the above operation while the negative film 16 is being re-conveyed over the negative carrier 18, the panorama-size photographic print 54B which is shown in FIG. 9, is formed onto the photographic paper 54.

When the operator looks in through the confirmation window 102, the negative film 16 in the pairs of cut-away portions 130 and 132 can be visually observed and the boundary between an image portion and a portion other than the image portion can be confirmed. Further, a decision can be made as to whether or not the type of image frame 16 is panorama in size. It is thus possible to easily decide the type of each image frame, improve workability and prevent the waste of photographic paper 54.

Further, since the pairs of cut-away portions 130 and 132 are covered by the light-shading member 140, the light, which has passed through the pairs of cut-away portions 130 and 132, is blocked by the light-shading member 140. Therefore, the light, which has passed through the pairs of cut-away portions 130 and 132, does not reach to the density measuring unit 56 and hence the measurement of light with respect to the panorama-size image frame 16B and the like can be performed.

Since the pair of cut-away portions 130 is provided at the positions near the ends of the pair of lengthwise sides 120A so as to enlarge the window 120, a portion (not shown) exposed for the positioning of the negative film 16, which is normally situated in the center of the image frame 16B or at an end thereof to position the negative film 16, is not included within the pair of cut-away portion 130. Accordingly, the probability of correctly observing the boundary between the image portion and the portion other than the image portion is high. In addition, the type of image frame can be determined more reliably.

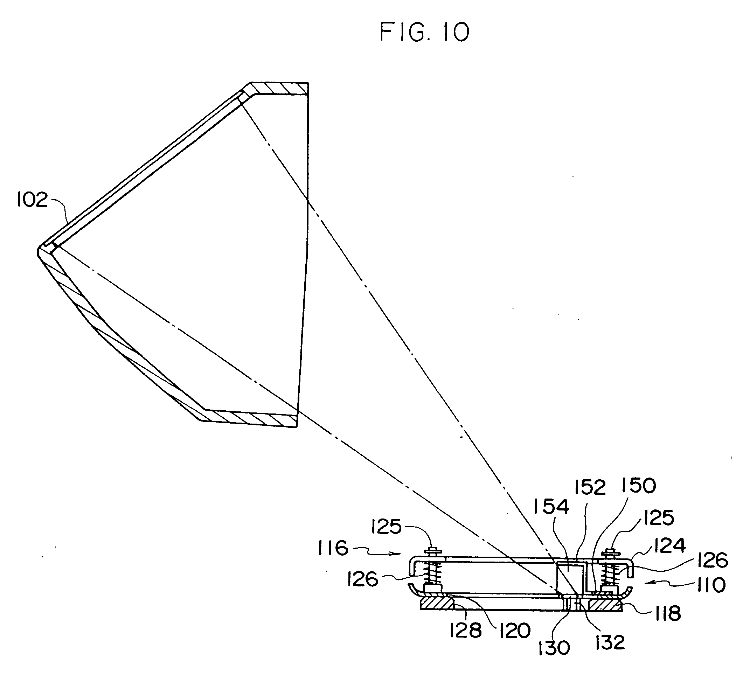

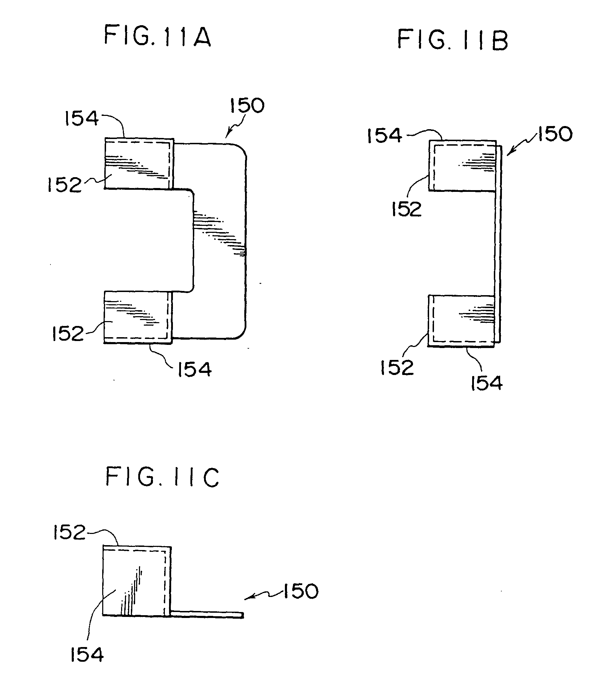

A negative mask for a photographic printer, according to a second embodiment of the present invention will next be described with reference to FIG. 10 and 11 in which a light-intransmissive or -shading member used for the negative mask is shown by way of illustrative example. Incidentally, the same elements of structure as those employed in the first embodiment are identified by like reference numerals and the description of common elements will therefore be omitted.

As shown in FIGS. 10 and 11, a pair of hoods 152, which forms leading end portions of a light-shading member 150 employed in the present embodiment, is bent upward at 90° on the side near a base end of the light-shading member 150 so as to extend from the base end of the light-shading member 150. Further, leading end portions of the pair of hoods 152 are bent at a 90 degree angle and extend so as to cover a pair of cut-away portions 130. Further, wall portions 154 each bent so as to form a quadrangle are formed as side portions of the pair of hoods 152, whereas each of the leading end portions of the pair of hoods 152 is formed in an open state.

Thus, even in the case of the present embodiment, the existence of a negative film 16 within the pair of cut-away portions 130 and a pair of cut-away portions 132, can be visually observed. Further, light, which has passed through the pairs of cut-away portions 130 and 132, can be blocked by the light-shading member 150 so as to be prevented from reaching to a density measuring unit 56.

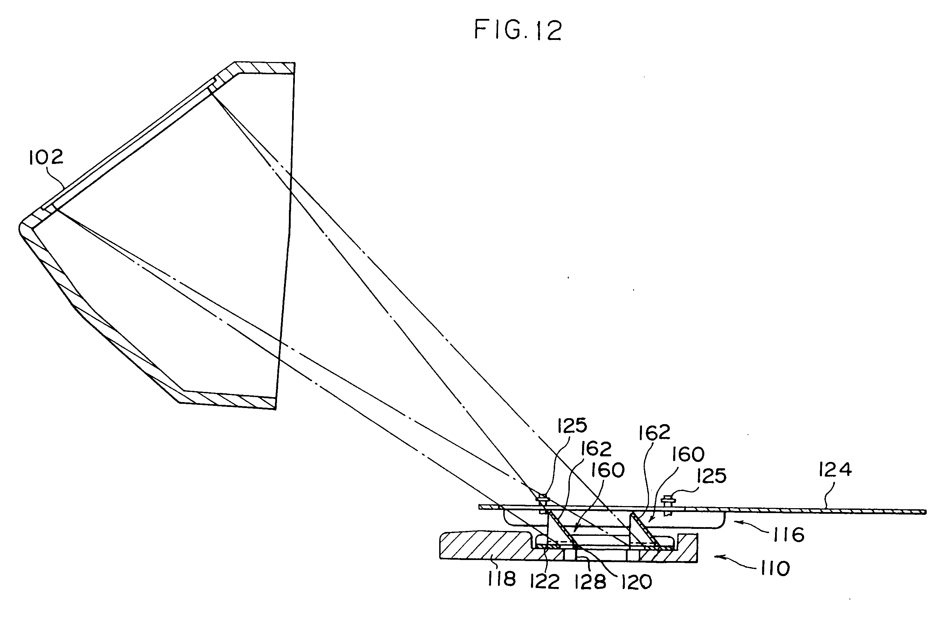

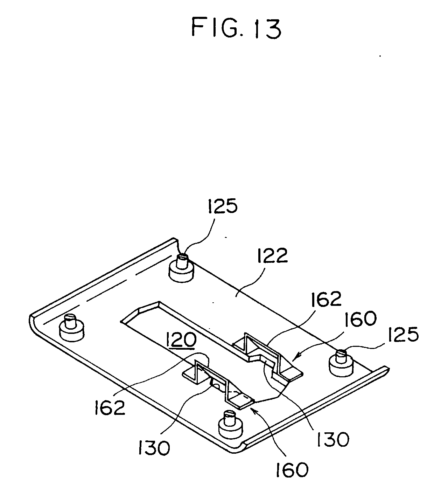

A negative mask for a photographic printer, according to a third embodiment of the present invention will next be described with reference to FIGS. 12 and 13 in which a light-shading member for the negative mask is shown by way of illustrative example. Incidentally, the same elements of structure as those employed in the first embodiment are identified by like reference numerals and the description of common elements will therefore be omitted.

As shown in FIGS. 12 and 13, a pair of hoods 162 is situated in the central portions of a pair of light-shading members 160 each shaped in the form of a rectangle in the present embodiment. The pair of hoods 162 is formed so as to cover a pair of cut-away portions 130. However, the pair of hoods 162 is bent at an angle similar to that employed in the first embodiment in such a manner that a confirmation window 102 for a negative mask 110 (shown in FIG. 12) extending in the direction in which the negative mask 110 is turned 90° as compared with that according to the first embodiment shown in FIG. 6, is opened.

Thus, according to the present embodiment, even when a panorama-size image frame is printed and exposed, a negative film 16, which exists within pairs of cut-away portions 130 and 132, can be visually observed without turning the negative mask 110 90°. Further, light, which has passed through the pairs of cut-away portions 130 and 132, can be blocked by the pair of light-shading members 160 so as to be prevented from reaching to the density measuring unit 56. In this case, however, photographic paper 54 which is wider in width is necessary. There is also a situation where the replacement of the photographic paper 54 with panorama-size photographic paper 54 is required.

In the illustrated embodiment, an operator determines, based merely on visual observation of the negative film 16, whether or not the image frame is full size or panorama size. However, even when, for example, a sensor for sensing the size of each of the image frames 16A and 16B is provided within a printer-processor 10 and image frame size is decided according to a signal detected by the sensor or even when the position of the image frame 16B is confirmed prior to being loaded into the printer-processor 10 and the confirmed position is inputted into the printer-processor 10 via a keyboard and stored therein as data, a more reliable decision can be made by using a visual confirming process.

In the illustrated embodiment, the width of the photographic paper 54 was set so as to correspond to a lengthwise side of a full-size photographic print 54A and a narrow side of a panorama-size photographic print 54B. However, two kinds of photographic paper 54 which are different in width are prepared in advance. Thereafter, these two kinds of photographic paper 54 can be replaced with the photographic prints 54A and 54B.

Further and different from the above embodiment, if a light-shading member for blocking light which escapes from a cut-away portion, is provided according to claim 1 and between the exposure stage 94 and the negative mask 110, it becomes unnecessary to attach the light-shading member to the negative mask 110 itself.

As has been described above, the negative masks for the photographic printer, according to the present invention, allows a visual determination as to whether the image frame is full-size or panorama size. This results in an improvement in workability and the prevention of wasting photographic paper.

Having now fully described some embodiments of the invention, it will be apparent to those skilled in the art that many changes and modifications can be made to the embodiments without departing from the scope of the invention as claimed.

## Claims

1. A photographic printer, which has a negative mask for masking a negative film (16), said negative mask having windows for passing printing light, wherein
said negative mask includes a mask member (122) for masking the negative film (16), and said mask member (122) has a said window comprising a first portion corresponding to an image frame on the negative film (16), and cut-away portions (130) defined in at least one side of said first portion, whereby portions of the negative film (16), which extend out from each image frame, are visually confirmable through said window,
**characterized in that**
said negative mask includes a set of substantially superimposed mask members (118, 122) for masking the negative film (16), each mask member having a said window for passing printing light,
each of said windows comprises a first portion corresponding to an image frame on the negative film (16), and cut-away portions (130, 132) defined in at least one side of said first portion, whereby portions of the negative film (16), which extend out from each image frame, are visually confirmable through said windows, and a light-shading member for blocking printing light, which escapes from said cut-away portions (130, 132), is provided in the path of light between a density measuring unit (56) and said negative mask.

2. A photographic printer according to claim 1, wherein said mask member (122) has a light-shading member (140) which is provided so as to cover said cut-away portions (130, 132) at positions where the printing light transmitted through said cut-away portions (130, 132) is blocked and which is formed in such a manner that said cut-away portions (130, 132) are confirmable from a diagonal direction.

3. A photographic printer according to claim 1, wherein said mask members (118, 122) respectively have rectangular-shaped windows, each of said cut-away portions (130, 132) is provided at a position near an end of at least one side of said each rectangular-shaped window, and said mask member(122) has a light-shading member (140) which is provided so as to cover said cut-away portions (130, 132) at positions whereby the printing light transmitted through said cut-away portions (130, 132) is blocked and which is formed in such a manner that said cut-away portions (130, 132) are confirmable from a diagonal direction.

4. A photographic printer according to claim 1, wherein said set of mask members comprises a pressing plate (122) arranged to be urged downward by springs and a mask (118) disposed below said pressing plate (122) whereby said negative film (16) can be fixedly interposed between said pressing plate (122) and said mask (118).

5. A photographic printer according to claim 4, wherein a light-shading member (140) which is provided so as to cover said cut-away portions (130, 132) at positions where printing light transmitted through said cut-away portions (130, 132) is blocked and which is formed in such a manner that said cut-away portions (130, 132) are confirmable from a diagonal direction, is provided on the pressing plate (122) side.

6. A photographic printer according to claim 2, wherein said light-shading member (140) has hoods (142) which are obliquely bent upward so as to block the printing light transmitted through said cut-away portions (130, 132) and which completely cover said cut-away portions (130, 132).

7. A photographic printer according to claim 2, wherein said cut-away portions (130, 132) are respectively formed in pairs and said light-shading member (140) is constructed such that hoods (142) obliquely bent upward so as to block the printing light transmitted through said cut-away portions (130, 132) are provided in a pair to correspond to said cut-away portions (130, 132) and completely cover said cut-away portions (130, 132).

8. A photographic printer according to claim 2, wherein said light-shading member (150) is bent upward at a 90 degree angle at a position near a base end of said light-shading member (150) so as to block the printing light transmitted through said cut-away portions (130, 132) and has hoods (152) which are further bent at a 90 degree angle from said bent light-shading member (150) so as to extend over said cut-away portions (130, 132) and which completely cover said cut-away portions (130, 132).

9. A photographic printer according to claim 2, wherein said cut-away portions (130, 132) are respectively formed in pairs, said light-shading members (160) having a pair of hoods (162) obliquely bent upward so as to block the printing light transmitted through said cut-away portions (130, 132) are formed in a pair so as to correspond to said cut-away portions (130, 132) and said cut-away portions (130, 132) are completely covered with said hoods (162).

10. A photographic printer according to claim 3, wherein said mask members (118, 122) respectively have rectangular-shaped windows each formed so as to correspond to a rectangular-shaped image frame that is narrower than an image frame of a normal size.

## Patentansprüche

1. Fotografisches Kopiergerät, das eine Negativmaske zum Abdecken eines Negativfilms (16) aufweist, wobei die Negativmaske Fenster hat, durch die Kopierlicht hindurchtritt und, wobei:
die Negativmaske ein Maskenelement (122) zum Abdecken des Negativfilms (16) enthält und das Maskenelement (122) ein solches Fenster aufweist, das einen ersten Abschnitt entsprechend einem Einzelbild auf dem Negativfilm (16) und Aussparungsabschnitte (130) umfasst, die an wenigstens einer Seite des ersten Abschnitts ausgebildet sind, so dass Abschnitte des Negativfilms (16), die sich über jedes Einzelbild hinauserstrecken, durch das Fenster hindurch visuell geprüft werden können,
**dadurch gekennzeichnet**, dass:
die Negativmaske einen Satz im Wesentlichen übereinander angeordneter Maskenelemente (118, 122) zum Abdecken des Negativfilms (16) enthält, wobei jedes Maskenelement ein solches Fenster zum Hindurchlassen von Kopierlicht aufweist,
jedes der Fenster einen ersten Abschnitt entsprechend einem Einzelbild auf dem Negativfilm (16) und Aussparungsabschnitte (130, 132) umfasst, die an wenigstens einer Seite des ersten Abschnitts ausgebildet sind, so dass Abschnitte des Negativfilms (16), die sich über das Einzelbild hinauserstrecken, durch die Fenster hindurch visuell geprüft werden können, und
ein Lichtabschirmungselement, das Kopierlicht abhält, das über die Aussparungsabschnitte (130, 132) austritt, auf dem Weg des Lichtes zwischen einer Dichtemesseinheit (56) und der Negativmaske angeordnet ist.

2. Fotografisches Kopiergerät nach Anspruch 1, wobei das Maskenelement (122) ein Lichtabschirmungselement (140) aufweist, das so angeordnet ist, dass es die Aussparungsabschnitte (130, 132) an Positionen abdeckt, an denen das durch die Aussparungsabschnitte (130, 132) hindurchgelassene Kopierlicht abgehalten wird, und das so ausgebildet ist, dass die Aussparungsabschnitte (130, 132) aus einer diagonalen Richtung geprüft werden können.

3. Fotografisches Kopiergerät nach Anspruch 1, wobei die Maskenelemente (118, 122) jeweils rechteckig geformte Fenster aufweisen und jeder der Aussparungsabschnitte (130, 132) an einer Position in der Nähe eines Endes wenigstens einer Seite des rechteckig geformten Fensters angeordnet ist und das Maskenelement (122) ein Lichtabschirmungselement (140) aufweist, das so angeordnet ist, dass es die Aussparungselemente (130, 132) an Positionen abdeckt, so dass das durch die Aussparungsabschnitte (130, 132) hindurchgelassene Kopierlicht abgehalten wird, und das so ausgebildet ist, dass die Aussparungsabschnitte (130, 132) aus einer diagonalen Richtung geprüft werden können.

4. Fotografisches Kopiergerät nach Anspruch 1, wobei der Satz Maskenelemente eine Pressplatte (122) umfasst, die von Federn nach unten gedrückt wird, sowie eine Maske (118), die unter der Pressplatte (122) angeordnet ist, so dass der Negativfilm (16) fest zwischen der Pressplatte (122) und der Maske (118) eingeschlossen werden kann.

5. Fotografisches Kopiergerät nach Anspruch 4, wobei ein Lichtabschirmungselement (140), das so angeordnet ist, dass es die Aussparungsabschnitte (130, 132) an Positionen abdeckt, an denen durch die Aussparungsabschnitte (130, 132) hindurchgelassenes Kopierlicht abgehalten wird, und das so ausgebildet ist, dass die Aussparungsabschnitte (130, 132) aus einer diagonalen Richtung geprüft werden können, auf der Seite der Pressplatte (122) angeordnet ist.

6. Fotografisches Kopiergerät nach Anspruch 2, wobei das Lichtabschirmungselement (140) Hauben (142) aufweist, die schräg nach oben gebogen sind, so dass sie das Kopierlicht abhalten, das durch die Aussparungsabschnitte (130, 132) hindurchgelassen wird, und die die Aussparungsabschnitte (130, 132) vollständig abdecken.

7. Fotografisches Kopiergerät nach Anspruch 2, wobei die Aussparungsabschnitte (130, 132) jeweils in Paaren ausgebildet sind, und das Lichtabschirmungselement (140) so aufgebaut ist, dass Hauben (142), die schräg nach oben gebogen sind und das durch die Aussparungsabschnitte (130, 132) hindurchgelassene Licht abhalten, in einem Paar entsprechend den Aussparungsabschnitten (130, 132) vorhanden sind und die Aussparungsabschnitte (130, 132) vollständig abdecken.

8. Fotografisches Kopiergerät nach Anspruch 2, wobei das Lichtabschirmungselement (150) an einer Position in der Nähe eines unteren Endes des Lichtabschirmungselementes (150) in einem Winkel von 90 Grad nach oben gebogen ist, so dass das durch die Aussparungsabschnitte (130, 132) hindurchgelassene Kopierlicht abgehalten wird, und es Hauben (152) aufweist, die von dem gebogenen Lichtabschirmungselement (150) weiter in einem Winkel von 90° nach oben gebögen sind, so dass sie sich über die Aussparungsabschnitte (130, 132) erstrecken und die die Aussparungsabschnitte (130, 132) vollständig abdecken.

9. Fotografisches Kopiergerät nach Anspruch 2, wobei die Aussparungsabschnitte (130, 132) jeweils in Paaren ausgebildet sind, die Lichtabschirmungselemente (160) mit einem Paar Hauben (162), die schräg nach oben gebogen sind, um das durch die Aussparungsabschnitte (130, 132) hindurchgelassenen Kopierlicht abzuhalten, in einem Paar entsprechend den Aussparungsabschnitten (130, 132) ausgebildet sind und die Aussparungsabschnitte (130, 132) vollständig von den Hauben (162) abgedeckt werden.

10. Fotografisches Kopiergerät nach Anspruch 3, wobei die Maskenelemente (118, 122) jeweils rechteckig geformte Fenster aufweisen, die jeweils so ausgebildet sind, dass sie einem rechteckig geformten Einzelbild entsprechen, das schmaler ist als ein Einzelbild normaler Größe.

## Revendications

1. Machine de tirage photographique, qui possède un cache de négatif destiné à cacher un négatif (16), le cache de négatif ayant des fenêtres destinées au passage de la lumière de tirage, dans laquelle
le cache de négatif comporte un organe de cache (122) destiné à cacher le négatif (16), et l'organe de cache (122) a une fenêtre comportant une première partie qui correspond à un cadre d'image formé sur le négatif (16) et des parties découpées (130) délimitées sur un côté au moins de la première partie, afin que les parties du négatif (16) qui s'étendent en dehors de chaque cadre d'image puissent être observées visuellement par la fenêtre,
caractérisée en ce que
le cache de négatif comprend un jeu d'organes de cache pratiquement superposés (118, 122) destinés à cacher le négatif (16), chaque organe de cache ayant une fenêtre destinée au passage de la lumière de tirage,
chacune des fenêtres comprend une première partie correspondant à un cadre d'image porté par le négatif (16) et des parties découpées (130, 132) délimitées d'un côté au moins de la première partie, si bien que des parties du négatif (16) qui s'étendent à l'extérieur de chaque cadre d'image peuvent être observées visuellement par les fenêtres, et
un organe d'obscurcissement destiné à arrêter la lumière de tirage, qui s'échappe des parties découpées (130, 132), est disposé sur le trajet de la lumière entre une unité (56) de mesure de densité et le cache de négatif.

2. Machine de tirage photographique selon la revendication 1, dans laquelle l'organe de cache (122) possède un organe d'obscurcissement (140) qui est destiné à couvrir les parties découpées (130, 132) à des positions auxquelles la lumière de tirage transmise par les parties découpées (130, 132) est arrêtée et qui est formé afin que les parties découpées (130, 132) puissent être observées en diagonale.

3. Machine de tirage photographique selon la revendication 1, dans laquelle les organes de cache (118, 122) ont respectivement des fenêtres de forme rectangulaire, chacune des parties découpées (130, 132) a une position proche d'une extrémité d'un côté au moins de chaque fenêtre de forme rectangulaire, et l'organe de cache (122) a un organe d'obscurcissement (140) disposé afin qu'il couvre les parties découpées (130, 132) à des positions telles que la lumière de tirage transmise par les parties découpées (130, 132) est arrêtée, et qui est formé afin que les parties découpées (130, 132) puissent être observées en diagonale.

4. Machine de tirage photographique selon la revendication 1, dans laquelle le jeu d'organes de cache comprend une plaque de pression (122) destinée à être poussée vers le bas par des ressorts et un cache (118) placé sous la plaque de pression (122), si bien que le négatif (16) peut être disposé à demeure entre la plaque de pression (122) et le cache (118).

5. Machine de tirage photographique selon la revendication 4, dans laquelle un organe d'obscurcissement (140) qui est disposé afin qu'il couvre les parties découpées (130, 132) à des positions auxquelles la lumière de tirage transmise par les parties découpées (130, 132) est arrêtée et qui est formé de manière que les parties découpées (130, 132) puissent être observées en diagonale, est disposé du côté de la plaque de pression (122).

6. Machine de tirage photographique selon la revendication 2, dans laquelle l'organe d'obscurcissement (140) a des capots (142) qui sont courbés obliquement vers le haut afin qu'ils arrêtent la lumière de tirage transmise par les parties découpées (130, 132) et qui couvrent totalement les parties découpées (130, 132).

7. Machine de tirage photographique selon la revendication 2, dans laquelle les parties découpées (130, 132) sont formées respectivement par paires et l'organe d'obscurcissement (140) est réalisé afin que des capots (142) courbés obliquement vers le haut afin qu'ils arrêtent la lumière de tirage transmise par les parties découpées (130, 132) sont disposés sous forme d'une paire correspondant aux parties découpées (130, 132) et couvrent totalement les parties découpées (130, 132).

8. Machine de tirage photographique selon la revendication 2, dans laquelle l'organe d'obscurcissement (150) est courbé vers le haut d'un angle de 90° à un emplacement proche d'une extrémité de base de l'organe d'obscurcissement (150) afin que la lumière de tirage transmise par les parties découpées (130, 132) soit arrêtée, et possède des capots (152) qui sont courbés en outre à 90° par rapport à l'organe courbé d'obscurcissement (150) afin qu'ils s'étendent au-dessus des parties découpées (130, 132) et qui couvrent totalement les parties découpées (130, 132).

9. Machine de tirage photographique selon la revendication 2, dans laquelle les parties découpées (130, 132) sont formées respectivement par paires, les organes d'obscurcissement (160) ayant une paire de capots (162) courbés obliquement vers le haut pour arrêter la lumière de tirage transmise par les parties découpées (130, 132) sont formés sous forme d'une paire afin qu'ils correspondent aux parties découpées (130, 132), et les parties découpées (130, 132) sont totalement couvertes par les capots (162).

10. Machine de tirage photographique selon la revendication 3, dans laquelle les organes de cache (118, 122) ont respectivement des fenêtres de forme rectangulaire formées chacune afin qu'elles correspondent à un cadre d'image de forme rectangulaire qui est plus étroit qu'un cadre d'image de format normal.
